# EUROPEAN PATENT APPLICATION

(11) **EP 3 636 702 A1**
(43) Date of publication of application: **15.04.2020**
(21) Application number: 19214177.8
(22) Date of filing: 06.12.2019
(51) Int. Cl.: C08K 9/08, C09D 175/00, B05D 5/08, C08K 3/20, C08K 3/36, C08K 3/22, C08L 27/00

(54) **HYDROPHOBIC COATING**

(71) Applicant: Solvay Specialty Polymers Italy S.p.A., 20021 Bollate (MI) (IT)
(72) Inventor: THOMSON, Mary, 20133 Milano (IT); HAMON, Christine, 20021 Bollate (IT)
(74) Representative: Benvenuti, Federica

(57) **Abstract**

The present invention relates to fluorine-containing inorganic particles and their use to provide coatings to improve the hydrophobic and/or icephobic surface properties of substrates.

## Description

### Technical Field

The present invention relates to fluorine-containing inorganic particles and their use to provide coatings to improve the hydrophobic and/or icephobic surface properties of substrates.

### Background Art

It is known that there is a permanent need in the industry to develop compositions aimed at modifying the surface properties of materials, such as notably metal, glass or ceramic, to provide hydrophobic and/or icephobic properties. For example, ice accretion and ice adhesion are deleterious phenomena, which can result in severe mechanical and electrical failures on power lines and power production by wind turbines, telecommunications, transportation such notably in aircrafts.

To limit the potential issue mentioned above, it is known in the art that coating compositions can be applied onto substrates in order to modify their surface properties. Said coating compositions typically comprise polymers like silicone, polytetrafluoroethylene (PTFE) and polyurethane-based polymers. Compositions comprising nanoparticles or nanofillers have been also disclosed in the art.

For example, WO 2012/170832 **(University of Virginia Patent Foundation)** discloses a superhydrophobic coating composition containing a polyurethane, a fluoropolymer, a nanofiller and an organic solvent. In particular, the fluoropolymer is a homopolymer or a copolymer containing a polyfluorinated monomer having the following chemical structure:

R_{f}-O-C(=O)-C(R)=CH-R

wherein
one of the R is a hydrogen atom and the other R is a hydrogen atom or an alkyl having 1 to 6 carbon atoms, and
Rf represents a linear or branched chain fluorinated radical containing 1 to 20 carbon atoms of formula -CₙHₓF(₂ₙ₊₁₋ₓ₎- in which n is from 1 to 20 and x is defined 0 ≤ x ≤ n.

US 2016/0289810 **(Ross Technology Corporation)** discloses hydrophobic, oleophobic and anti-icing coatings obtained with a composition comprising a lacquer binder, first particles having a size of about 30 to 250 microns, second particles modified with hexamethyldisilazane, or comprising covalently bound polydimethylsiloxane or comprising covalently bound moieties selected from alkyl, haloalkyl, perfluoroalkyl, which are bonded to said second particles by reaction with a silanizing agent.

EP2966113 **(Unimatec Co., Ltd.)** discloses fluorine-containing nano composite particles comprising a condensate of a fluorine-containing alcohol represented by the following formula:

R_{F}-A-OH

wherein R_{F} is a perfluoroalkyl group of a polyfluoroalkyl group in which some of the fluorine atoms of the perfluoroalkyl group are replaced by hydrogen atoms, and A is an alkylene group having 1 to 6 carbon atoms;
and an alkoxysilane.

In an alternative, the fluorine-containing nano composite particles comprise a condensate of a fluorine-containing alcohol represented by the following formula:

R_{F}'-A-OH [Ia]

or

HO-A-R_{F}"-A-OH [Ib]

wherein R_{F}' is a linear or branched perfluoroalkyl group containing O, S, N atom; R_{F}" is a linear or branched perfluoroalkylene group containing O, S, N atom, and A is an alkylenen group having 1 to 6 carbon atoms; and an alkoxysilane.

As the fluorine-containing alcohol of formula [Ia] and [Ib], oligomers based on hexafluoropropene oxide alcohol, which have formula -[CF(CF₃)CF₂O]-are mentioned and used in the examples.

More recently, WO 2019/121829 **(Rhodia Operations)** disclosed an article comprising a substrate and a coating composition deposited onto the surface of said substrate, said coating composition comprising (i) one or more crosslinked polyurethane polymer(s) and (ii) particulates of precipitated silica functionalized with a linear polyfluorinated compound presenting at least one α,ω-alkoxysilane end group(s). In the example, Fluorolink® PFPE S10 from Solvay was used, which comprises an alkoxysilane group at both its chain ends.

### Summary of invention

Despite the effort made in the art, the Applicant perceived that there is still the need for a composition capable of providing oleophobic and icephobic properties to a substrate.

In particular, the Applicant surprisingly found that a composition comprising inorganic oxide particles covalently bonded to an asymmetric (per)fluoropolyether, showed improved properties compared to composition disclosed in WO 2019/121829**.**

Thus, in a first aspect, the present invention relates to inorganic oxide particle [particle (P)] having an average particle diameter (D50) from 1 to 50 microns, said particle (P) having an external surfaces comprising at least one oxygen-containing group, wherein the oxygen atom of said oxygen-containing group is covalently bonded to a group of formula (I) :

(I) T-(Rh)ₐ-R_{pf}-(Ra)_{b}-Y

wherein
T is a perfluoroalkyl group comprising from 1 to 3 carbon atoms, -OH, or an alkyl group comprising from 1 to 3 carbon atoms optionally substituted with at least one -OH group;
a is 0 or 1;
Rh is an alkylene chain having from 1 to 10 carbon atoms, optionally substituted with at least one -OH group;
R_{pf} is a (per)fluoropolyoxyalkylene chain;
b is 0 or 1;
Ra is a chain of formula -[CH(J)CH₂O]ₙₐ[CH₂CH(J)O]_{na'}-,
wherein
each J is independently hydrogen, straight or branched alkyl or aryl,
preferably methyl, ethyl or phenyl and
na and na' are each independently zero or an integer from 1 to 50, with the proviso that na+na' is from 1 to 50;
Y is a group of formula (Y-I) or (Y-II) : 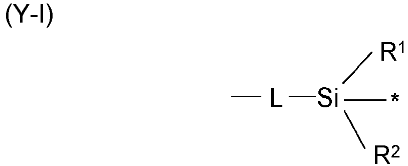
wherein
L is a divalent organic linking group,
* indicates the bond to the oxygen atom of particle (P), and
each of R¹ and R², identical or different from each other, is a group -O-R₃ wherein R₃ is a linear or branched alkyl chain comprising from 1 to 10 carbon atoms or each of R¹ and R² forms a bond with an oxygen atom of an oxygen-containing group of particle (P); 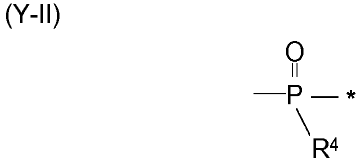
wherein
* indicates the bond to the oxygen atom of particle (P), and R⁴ is -OH or R⁴ forms a bond with an oxygen atom of an oxygen-containing group of particle (P);
provided hat when Y complies with formula (Y-II), b is 1.

In a second aspect, the present invention relates to a composition [composition (C)] comprising at least one particle (P) as defined above and at least one solvent [solvent (S)].

The Applicant surprisingly found that when particles (P) are manufactured according to the present invention, an increase in throughput is obtained due to the lower amount of solvent necessary for reacting the particles with the (per)fluorinated compound providing groups of formula (I) as defined above.

Indeed, without being bound by any theory, the Applicant found that when the bi-functional perfluoropolyether polymer is used to graft the silica particles as described in WO 2019/121829**,** dilute conditions are required to avoid (or at least limit) the formation of bridges with two or more silica particles, which could led to increase in the viscosity of the final composition.

On the contrary, the group of formula (I) represented above allows to avoid the formation of bridges between two inorganic oxide particles, with several advantages. On the one hand, a lower amount of solvent is required for the manufacture of the particles (P) of the invention so that it's easier to control the final viscosity of the composition. On the other hand, the non-formation of bridges formation lead to a higher density of groups of formula (I) onto the surface of the inorganic oxide particles, with improved anti-icing properties of the final composition (C).

According to a third embodiment, the present invention relates to a hydrophobic and/or icephobic article, said article comprising a substrate having at least a first surface, said first surface being in direct contact with a first coating layer, said first coating layer comprising at least one particle (P) as defined above.

### Description of embodiments

For the purpose of the present description and of the following claims:
- the use of parentheses around symbols or numbers identifying the formulae, for example in expressions like "particle (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural form, depending on the context;
- the term "(per)fluoropolyether" is intended to indicate fully or partially fluorinated polyether.

Preferably, the inorganic oxide particle is selected in the group comprising, more preferably consisting of, silicon dioxide (also referred to as silica), titanium dioxide, aluminium(III) oxide, zirconium dioxide, cerium oxide, zinc oxide, iron oxide and mixtures thereof.

Advantageously, particle(s) (P) has(have) an average particle diameter (D50) from 1 to 35 microns, more preferably from 1 to 10 microns.

As used in the present specification, the expression "average particle diameter (D50)" is intended to refer to the median (D50) of the number particles size distribution as measured by laser diffraction granulometry after ultrasound treatment in water.

More preferably, said inorganic oxide particles are silica particles.

According to a preferred embodiment, said silica particles are precipitated silica particles.

Precipitated silica particles can be manufactured according to methods known to the person skilled in art, such as for example those disclosed in EP 396450**,** EP 0520862**,** WO 2009/112458 **or** WO 2011/117400**.**

Precipitated silica particles have preferably a BET surface area in the range from 80 to 300 m²/g. BET surface area is determined according to the Brunauer - Emmett - Teller method as detailed in **standard NF ISO 5794-1, Appendix E (June 2010).**

Examples of silica particles are those commercially available by Solvay under the trade name Tixosil® and Zeosil®, by Evonik Industries under the trade name Ultrasil®, by PPG under the trade name Hi-Sil®.

Preferably, in formula (I), T is perfluoroalkyl group comprising from 1 to 3 carbon atoms or -OH.

Preferably, in formula (I),(Rh) is an alkylene chain having from 1 to 6, even more preferably from 1 to 3, carbon atoms, optionally substituted with at least one -OH group.

Preferably, in formula (I), (R_{pf}) is a chain of formula

-(O-D)_{z3}-(CFX^{#})_{z1}-O(R_{f})(CFX*)_{z2}-(D*-O)_{z4}-

wherein
z1 and z2, equal or different from each other, are equal to or higher than 1;
X^{#} and X*, equal or different from each other, are -F or -CF₃,
provided that when z1 and/or z2 are higher than 1, X^{#} and X* are -F;
D and D*, equal or different from each other, are an alkylene chain comprising from 1 to 6 and even more preferably from 1 to 3 carbon atoms, said alkyl chain being optionally substituted with at least one perfluoroalkyl group comprising from 1 to 3 carbon atoms;
z3 and z4, equal or different from each other, are 0 or 1;
(R_{f}) comprises, preferably consists of, repeating units R^{∘}, said repeating units being independently selected from the group consisting of:
   (i) -CFXO-, wherein X is F or CF₃;
   (ii) -CFXCFXO-, wherein X, equal or different at each occurrence, is F or CF₃, with the proviso that at least one of X is -F;
   (iii) -CF₂CF₂CW₂O-, wherein each of W, equal or different from each other, are F, Cl, H;
   (iv)

      -CF₂CF₂CF₂CF₂O-;
   (v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO-, -CF₂CFXO-, -CF₂CF₂CF₂O-, -CF₂CF₂CF₂CF₂O-, with each of each of X being independently F or CF₃ and T being a C₁-C₃ perfluoroalkyl group.

Preferably, z1 and z2, equal or different from each other, are from 1 to 10, more preferably from 1 to 6 and even more preferably from 1 to 3.

Preferably, D and D*, equal or different from each other, are a chain of formula -CH₂-, -CH₂CH₂- or -CH(CF₃)-.

Preferably, chain (R_{f}) complies with the following formula:

(R_{f}-I) -(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) complies with one of the following formulae :

(R_{f}-IIA) -[(CF₂CF₂O)ₐ₁(CF₂O)ₐ₂]-

wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;

(R_{f}-IIB) -[(CF₂CF₂O)_{b1}(CF₂O)_{b2}(CF(CF₃)O)_{b3}(CF₂CF(CF₃)O)_{b4}]-

wherein:
b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;

(R_{f}-IIC) -[(CF₂CF₂O)_{c1}(CF₂O)_{c2}(CF₂(CF₂)_{cw}CF₂O)_{c3}]-

wherein:
cw = 1 or 2;
c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2;

(R_{f}-IID) -[(CF₂CF(CF₃)O)_{d}]-

wherein:
d is an integer > 0 such that the number average molecular weight is between 400 and 10,000, preferably between 400 and 5,000;

(R_{f}-IIE) -[(CF₂CF₂C(Hal*)₂O)ₑ₁-(CF₂CF₂CH₂O)ₑ₂-(CF₂CF₂CH(Hal*)O)ₑ₃]-

wherein:
- Hal*, equal or different at each occurrence, is a halogen selected from fluorine and chlorine atoms, preferably a fluorine atom;
- e1, e2, and e3, equal to or different from each other, are independently integers ≥ 0 such that the (e1+e2+e3) sum is comprised between 2 and 300.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 10,000, preferably between 400 and 5,000, with the ratio a1/a2 being generally comprised between 0.1 and 10, more preferably between 0.2 and 5.

Preferably, in formula (I), na+na' is from 1 to 45, more preferably from 4 to 45, even more preferably from 4 to 30. Preferred embodiments are those wherein na+na' is from 4 to 15.

More preferably, in formula (I), chain (Ra) is selected from:

(Ra-I) -(CH₂CH₂O)ⱼ₁-H

(Ra-II) -[CH₂CH(CH₃)O]ⱼ₂-H

(Ra-III) -[(CH₂CH₂O)ⱼ₃-(CH₂CH(CH₃)O)ⱼ₄]ⱼ₍ₓ₎-H

wherein
j1 and j2, each independently, are an integer from 1 to 50, preferably from 2 to 50, more preferably from 3 to 40, even more preferably from 4 to 15, and still more preferably from 4 to 10;
j3, j4 and j(x) are integers from 1 to 25, such that the sum of j3 and j4 is from 2 to 50, more preferably from 3 to 40, even more preferably from 4 to 15, and still more preferably from 4 to 10.

The recurring units having j3 and j4 as indexes can be either randomly distributed or they can be arranged to form blocks.

Preferably, in formula (Y-I), L is an alkyl chain comprising from 1 to 6 carbon atoms and optionally at least one N, O or S atom. More preferably, L is an alkyl chain as defined above further comprising an amide moiety. According to a preferred embodiment, L complies with formula

-C(=O)-NH-(CH₂)₃-.

Preferably, in formula (Y-I), both R1 and R2 are a group -O-R₃ wherein R₃ is a linear or branched alkyl chain comprising from 1 to 6 carbon atoms, more preferably from 1 to 3 carbon atoms.

Preferably, in formula (Y-II), R⁴ is -OH.

According to a preferred embodiment, Y complies with formula (Y-I).

Advantageously, particles (P) according to the present invention are manufactured by contacting at least one inorganic oxide particle as defined above with at least one (per)fluoropolyether (PFPE) polymer suitable to provide the groups of formula (I) defined above.

Advantageously, PFPE polymers suitable as starting materials for providing groups of formula (I) comply with the following chemical formula [PFPE-a]:

T-(Rh)ₐ-R_{pf}-(Ra)_{b}-Y*

wherein
T, Rh, a, R_{pf}, Ra and b are as defined above, and
Y* is a group of formula (Y*-I) or (Y*-II):
(Y*-I) -L-Si(R^{1*})(R^{2*})(R^{Y})
wherein
L is as defined above;
R^{1*}, R^{2*} and R^{Y} identical or different each other, are a group -O-R₃ wherein R_{3*} is a linear or branched alkyl chain comprising from 1 to 10 carbon atoms;

   (Y*-II) -P(=O)(OH)₂.

As mentioned above, at least one oxygen atom of the oxygen-containing groups onto the external surface of particles (P) is covalently bonded to the group of formula (I) defined above.

Advantageously, said oxygen-containing groups are -OH groups.

Without being bound by any theory, the Applicant noted that when said PFPE polymer and said inorganic oxide particles are contacted, a condensation reaction occurs between said reactive groups of group (Y*) as described above and the -OH groups which are present onto the surface of the inorganic particles, thus forming a covalent bond.

Preferably, composition (C) comprises at least one organic solvent [solvent (S)], more preferably said solvent (S) is selected from those having a boiling point below 150°C.

Said solvent (S) is preferably selected in the group comprising, more preferably consisting of: xylene; hexafluoro-xylene; tetrahydrofuran; butyl acetate; ethyl acetate; isopropyl acetate; methoxypropyl cetate; isobutyl isobutyrate; alcohols such as ethanol, iso-propanol, methoxy propanol, 1-butanol, 2-butanol, 1-propanol; ketones, such as acetone, methyl ethyl ketone; water; and mixtures thereof.

Preferably, said composition (C) comprises said at least one solvent in an amount from 20 to 98 wt.% based on the total weight of the composition (C).

Preferably, said composition (C) comprises particles (P) according to the present invention in an amount from 2 to 50 wt.%, more preferably from 10 to 30 wt.%, based on the total weight of the composition (C).

The person skilled in the art can determine if additional ingredients need to be added to said composition (C), for example with aim of modifying the viscosity of the composition (C).

Advantageously, said composition (C) is manufactured via a process [process (P)] comprising the following steps:
(I) contacting at least one inorganic oxide particle having an external surface comprising at least one oxygen-containing group with at least one PFPE polymer as defined above and at least one solvent [solvent S*] to provide a first composition [composition (C1)];
(II) reacting the oxygen atom of said at least one oxygen-containing group and said group (-Y*) of said PFPE polymer, thus providing composition (C).

Under step (I), said solvent (S*) is selected in the group detailed above for solvent (S).

Optionally, after said step (I), step (I-a) of heating said composition (C1) can be performed. Preferably, said heating is performed at a temperature from 40°C to a temperature at least 10°C lower than the boiling temperature of the solvent (S*).

Optionally, after said step (I) or after said step (I-a), step (I-b1) of filtering and/or step (I-b2) of washing the composition obtained in the previous step can be performed, so that any unreacted ingredient is extracted from the composition.

Optionally, step (I-c) of drying the composition obtained in any one of the previous step can be performed, followed by step (II) of dispersing the dried composition thus obtained in at least one solvent (S) as defined above.

Particles (P) or composition (C) according to the present invention can be used as such.

Alternatively, particles (P) or composition (C) according to the present invention are advantageously added to a liquid solution [composition (C_{F})] comprising at least one binder.

Preferably, said at least one binder is selected from lacquer binders, cross-linkable polyurethane polymer precursors and polyurethane binders or an epoxy resin.

For example, polyurethane polymer precursors are commercially available from PPG Aerospace as '5441 PU66 4H PU Topcoat Gloss' , from AkzoNobel as "Aviox Finish 77702', and from DuPont under the trade name Imron®, such as Imron® AF3500.

Thus, an embodiment of the present invention relates to a liquid solution [composition (C_{F*})] comprising
- at least one binder and
- at least one particle (P) as defined in any one of Claims 1 to 6 or composition (C) as defined in anyone of Claims 8 and 9.

With the aim of facilitating the dispersion of composition (C) of the invention in composition (C_{F}) described above to provide said composition (C_{F*}), a monofunctional organic compound having low molecular weight and comprising at least one silane group can be added to composition (C).

Preferably, said monofunctional organic compound is in an amount from 0.01 to 10 wt.% based on the total weight of composition (C_{F*}).

Said composition (C_{F*}) can comprise additional additives known in the art for coating compositions, such as curing agents, pigment, rheology or flow control agents, plasticizers, pigments, dispersing agents, surface wetting agents, surfactants, ultraviolet absorbers or stabilizers, and mixtures thereof.

When present, each of said additional additives is present in composition (C_{F}) in an amount up to 5 wt.%, more preferably up to 2 wt.% based on the total weight of said composition (C_{F}).

Preferably, said substrate is selected in the group comprising metals, such as steel, stainless steel, aluminium; glass; ceramic; rubber; plastic; and wood.

Preferably, said article is suitable for use in the automotive, aircraft, naval, building or energy industries.

In one embodiment, the present invention further relates to a method of providing a hydrophobic and/or icephobic article as defined above, said method comprising
(i) providing an article having at least a first surface,
(ii) contacting said first surface with at least one particle (P) as defined above, or with composition (C) as defined above or with composition (C_{F*}) as defined above.

Methods known to the person skilled in the art can be used to apply said composition (C) (when used as such) or composition (C_{F*}) onto said at least one surface of a substrate. For example, the surface of the substrate can be dipped in tanks containing the coating compositions and then dried.

According to a preferred embodiment, composition (C) or composition (C_{F*}) is sprayed onto at least one surface of the substrate thus providing a layer having a thickness between 1 and 100 microns (this method is also known as 'spray coating').

Other methods such as spin coating or blade coating can also be used.

## Claims

1. Inorganic oxide particle [particle (P)] having an average particle diameter (D50) from 1 to 50 microns, said particle (P) having an external surface comprising at least one oxygen-containing group, wherein the oxygen atom of said oxygen-containing group is covalently bonded to a group of formula (I) :
(I) T-(Rh)ₐ-R_{pf}-(Ra)_{b}-Y
wherein
T is a perfluoroalkyl group comprising from 1 to 3 carbon atoms, -OH, or an alkyl group comprising from 1 to 3 carbon atoms optionally substituted with at least one -OH group;
a is 0 or 1;
Rh is an alkylene chain having from 1 to 10 carbon atoms, optionally substituted with at least one -OH group;
R_{pf} is a (per)fluoropolyoxyalkylene chain;
b is 0 or 1;
Ra is a chain of formula
-[CH(J)CH₂O]ₙₐ[CH₂CH(J)O]_{na'}-,
wherein
each J is independently hydrogen, straight or branched alkyl or aryl, preferably methyl, ethyl or phenyl and
na and na' are each independently zero or an integer from 1 to 50, with the proviso that na+na' is from 1 to 50;
Y is a group of formula (Y-I) or (Y-II) : 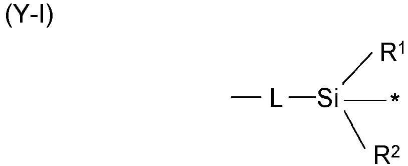
wherein
L is a divalent organic linking group,
* indicates the bond to the oxygen atom of particle (P), and
each of R¹ and R², identical or different from each other, is a group -O-R₃ wherein R₃ is a linear or branched alkyl chain comprising from 1 to 10 carbon atoms or each of R¹ and R² forms a bond with an oxygen atom of an oxygen-containing group of particle (P); 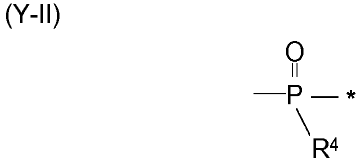
wherein
* indicates the bond to the oxygen atom of particle (P), and
R⁴ is -OH or R⁴ forms a bond with an oxygen atom of an oxygen-containing group of particle (P);
provided that when Y complies with formula (Y-II), b is 1.

2. The particle (P) according to Claim 1, wherein said inorganic oxide particle is selected in the group comprising: silicon dioxide, titanium dioxide, aluminium(III) oxide, zirconium dioxide, cerium oxide, zinc oxide, iron oxide and mixtures thereof.

3. The particle (P) according to Claim 1, wherein said particle (P) has an average particle diameter (D50) from 1 to 35 microns, more preferably from 1 to 10 microns, as measured by laser diffraction granulometry after ultrasound treatment in water.

4. The particle (P) according to any one of the preceding claims, wherein in formula (I) :
(Rh) is an alkylene chain having from 1 to 6 carbon atoms, optionally substituted with at least one -OH group; and/or
(R_{pf}) is a chain of formula -(O-D)_{z3}-(CFX^{#})_{z1}-O(R_{f})(CFX*)_{z2}-(D*-O)_{z4}-
wherein
z1 and z2, equal or different from each other, are equal to or higher than 1;
X^{#} and X*, equal or different from each other, are -F or -CF₃,
provided that when z1 and/or z2 are higher than 1, X^{#} and X* are -F;
D and D*, equal or different from each other, are an alkylene chain comprising from 1 to 6 and even more preferably from 1 to 3 carbon atoms, said alkyl chain being optionally substituted with at least one perfluoroalkyl group comprising from 1 to 3 carbon atoms;
z3 and z4, equal or different from each other, are 0 or 1;
(R_{f}) comprises, preferably consists of, repeating units R^{∘}, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO-, -CF₂CFXO-, -CF₂CF₂CF₂O-, -CF₂CF₂CF₂CF₂O-, with each of each of X being independently F or CF₃ and T being a C₁-C₃ perfluoroalkyl group; and/or
(Ra) is selected from:
(Ra-I) -(CH₂CH₂O)ⱼ₁-H
(Ra-II) -[CH₂CH(CH₃)O]ⱼ₂-H
(Ra-III) -[(CH₂CH₂O)ⱼ₃-(CH₂CH(CH₃)O)ⱼ₄]ⱼ₍ₓ₎-H
wherein
j1 and j2, each independently, are an integer from 1 to 50, preferably from 2 to 50, more preferably from 3 to 40, even more preferably from 4 to 15, and still more preferably from 4 to 10;
j3, j4 and j(x) are integers from 1 to 25, such that the sum of j3 and j4 is from 2 to 50, more preferably from 3 to 40, even more preferably from 4 to 15, and still more preferably from 4 to 10.

5. The particle (P) according to Claim 4, wherein in formula (I) (R_{f} complies with the following formula:
(R_{f}-I) -[(CFX¹O)_{g1}CFX²CFX³O)_{g2}(CF₂CF₂CF₂O)_{g3}(CF₂CF₂CF₂CF₂O)_{g4}]-
wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

6. The particle (P) according to Claim 5, wherein in formula (I) (R_{f} complies with one of the following formulae:
(R_{f}-IIA) -[(CF₂CF₂O)ₐ₁(CF₂O)ₐ₂]-
wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;
(R_{f}-IIB) -[(CF₂CF₂O)_{b1}(CF₂O)_{b2}(CF(CF₃)O)_{b3}(CF₂CF(CF₃)O)_{b4}]-
wherein:
b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;
(R_{f}-IIC) -[(CF₂CF₂O)_{c1}(CF₂O)_{c2}(CF₂(CF₂)_{cw}CF₂O)_{c3}]-
wherein:
cw = 1 or 2;
c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2;
(R_{f}-IID) -[(CF₂CF(CF₃)O)_{d}]-
wherein:
d is an integer > 0 such that the number average molecular weight is between 400 and 10,000, preferably between 400 and 5,000; (R_{f}-IIE) -[(CF₂CF₂C(Hal*)₂O)ₑ₁-(CF₂CF₂CH₂O)ₑ₂-(CF₂CF₂CH(Hal*)O)ₑ₃]- wherein:
- Hal*, equal or different at each occurrence, is a halogen selected from fluorine and chlorine atoms, preferably a fluorine atom;
- e1, e2, and e3, equal to or different from each other, are independently integers ≥ 0 such that the (e1+e2+e3) sum is comprised between 2 and 300.

7. A method for manufacturing particle (P) as defined in any one of Claims 1 to 6, said method comprising contacting at least one inorganic oxide particle with at least one (per)fluoropolyether (PFPE) polymer complying with the following chemical formula [PFPE-a]:
T-(Rh)ₐ-R_{pf}-(Ra)_{b}-Y* [PFPE-a]
wherein
T, Rh, a, R_{pf}, Ra and b have the meanings defined in anyone of Claims 1, 4, 5 and 6, and
Y* is a group of formula (Y*-I) or (Y*-II):
(Y*-I) -L-Si(R^{1*})(R^{2*})(R^{Y})
wherein
L is as defined in Claim 1;
R^{1*}, R^{2*} and R^{Y} identical or different each other, are a group -O-R₃
wherein R_{3*} is a linear or branched alkyl chain comprising from 1 to 10 carbon atoms;
(Y*-II) -P(=O)(OH)₂.

8. A composition [composition (C)] comprising at least one particle (P) as defined in any one of Claims 1 to 6 and at least one solvent [solvent (S)], said solvent (S) being preferably selected in the group comprising, more preferably consisting of: xylene; hexafluoro-xylene; tetrahydrofuran; butyl acetate; ethyl acetate; isopropyl acetate; methoxypropyl cetate; isobutyl isobutyrate; alcohols such as ethanol, iso-propanol, methoxy propanol, 1-butanol, 2-butanol, 1-propanol; ketones, such as acetone, methyl ethyl ketone; water; and mixtures thereof.

9. The composition (C) according to Claim 8, wherein said at least one solvent is in an amount from 20 to 98 wt.% based on the total weight of the composition (C); and/or said particles (P) are in an amount from 2 to 50 wt.%, based on the total weight of the composition (C).

10. A process [process (P)] for manufacturing composition (C) according to Claim 8 or 9, said process (P) comprising the following steps:
(I) contacting at least one inorganic oxide particle having an external surface comprising at least one oxygen-containing group with at least one PFPE polymer complying with chemical formula [PFPE-a] as defined in Claim 7, and at least one solvent [solvent S*] to provide a first composition [composition (C1)];
(II) reacting the oxygen atom of said at least one oxygen-containing group and said group (-Y*) of said PFPE polymer complying with formula [PFPE-a], thus providing composition (C).

11. An article comprising a substrate having at least a first surface,said first surface being in direct contact with a first coating layer, said first coating layer comprising at least one particle (P) as defined in any one of Claims 1 to 6.

12. The article according to Claim 11, wherein said substrate is selected in the group comprising metals, such as steel, stainless steel, aluminium; glass; ceramic; rubber; plastic; and wood.

13. A liquid solution [composition (C_{F*} comprising
- at least one binder and
- at least one particle (P) as defined in any one of Claims 1 to 6 or composition (C) as defined in anyone of Claims 8 and 9.

14. A method of providing a hydrophobic and/or icephobic article according to Claims 11 or 12, said method comprising :
(i) providing an article having at least a first surface,
(ii) contacting said first surface with at least one particle (P) as defined in any one of Claims 1 to 6 or with composition (C) as defined in Claim 8 or 9 or with composition (C_{F*}) as defined in Claim 13.
